## Europäisches Patentamt

**European Patent Office**

**Office européen des brevets**

(19)

(11) Numéro de publication: **0 146 459**
**B1**

(12) # FASCICULE DE BREVET EUROPÉEN

(45) Date de publication du fascicule du brevet: **02.09.87**

(51) Int. Cl.⁴: **H 01 S 3/113**

(21) Numéro de dépôt: **84402492.7**

(22) Date de dépôt: **05.12.84**

(54) **Laser à déclenchement.**

(30) Priorité: **15.12.83 FR 8320097**

(43) Date de publication de la demande:
**26.06.85 Bulletin 85/26**

(45) Mention de la délivrance du brevet:
**02.09.87 Bulletin 87/36**

(84) Etats contractants désignés:
**DE FR GB IT NL SE**

(56) Documents cité:
**US-A-3 522 553**
**US-A-4 242 645**

**APPLIED PHYSICS B. PHOTOPHYSICS AND LASER CHEMISTRY, vol. B30, no. 2, février 1983, pages 57-77, Heidelberg, DE; E. ARIMONDO et al.: "Repetitive passive Q-switching and bistability in lasers with saturable absorbers"**
**IDEM**
**IEEE JOURNAL OF QUANTUM ELECTRONICS, vol. QE-7, no. 8, août 1971, pages 427-429, New York, US; D.R. HALL et al.: "High-efficiency driven Q switching of the CO2 laser using the Stark effect in molecular gases"**
**SOVIET PHYSICS JETP, vol. 34, no. 2, février 1972, pages 265-270, New York, US; YU.V. BRZHAZOVSKII et al.: "Theoretical and experimental investigation of radiation pulsation**

(73) Titulaire: **SOCIETE ANONYME DE TELECOMMUNICATIONS, 41, rue Cantagrel, F-75624 Paris Cedex 13 (FR)**

(72) Inventeur: **Midavaine, Thierry Raoul, 41, rue Cantagrel, F-75631 Paris Cédex 13 (FR)**
Inventeur: **Ouhayoun, Michel, 41, rue Cantagrel, F-75631 Paris Cédex 13 (FR)**

(74) Mandataire: **Bloch, Robert, 6, rue du Faubourg Saint- Honoré, F-75008 Paris (FR)**

(56) Documents cité: (suite)
**from a CO2 laser with a nonlinear absorbing cell"**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un laser à déclenchement, comprenant, dans une cavité, une cellule d'un gaz d'amplification et une cellule d'un gaz d'absorption, des moyens d'excitation du gaz d'amplification et des moyens d'excitation du gaz d'absorption.

Quand une cellule contenant un gaz absorbant est placée dans la cavité d'un laser, l'émission laser, normalement continue, peut être convertie en une émission pulsée, sous réserve qu'il s'agisse d'un absorbant saturable dont le paramètre de saturation est comparable à l'intensité circulant dans le laser.

Cette conversion a été désignée sous l'appellation de "déclenchement passif de Q", ou "passive Q - switching", où Q est le coefficient de qualité.

Pour pulser par exemple un laser $CO_2$, on a déjà, dès 1967, proposé l'hexafluorure de soufre, le propylène, l'acide formique, et même le gaz carbonique $CO_2$, ou un mélange contenant ce gaz, selon la longueur d'onde de l'émission laser.

Quand on adopte le gaz carbonique comme agent de pulsation d'un laser $CO_2$, la transition d'absorption et la transition d'émission laser mettent en jeu les mêmes niveaux vibrationnels. En outre, le gaz carbonique de pulsation doit être chauffé pour peupler le niveau d'absorption, ce gaz n'étant pas absorbant dans son niveau fondamental.

On remarquera ici que le déclenchement passif d'un laser $CO_2$ par le même $CO_2$ ne nécessite pas de réseau dans la cavité, puisque, aussi bien à l'amplification qu'à l'absorption, la transition s'effectue entre les deux mêmes niveaux, le problème de la coïncidence des raies d'émission et d'absorption ne se posant donc pas.

De façon générale, la cadence des impulsions d'un laser à déclenchement passif dépend de la nature du gaz de déclenchement, ou de pulsation, de son coefficient d'absorption, de sa température, de sa pression et de l'intensité lumineuse du laser.

On explique le déclenchement passif d'un laser de la manière suivante:

Une émission spontanée et stimulée arrive sur le gaz absorbant. Celui-ci résiste tout d'abord à l'aveuglement (bleaching) de cette émission, notamment par transfert d'énergie de collision au niveau d'absorption. L'émission laser est ainsi empêchée. Quand l'émission spontanée et stimulée devient suffisamment intense et arrive finalement à traverser l'absorbant, cette émission induit un état de transparence, la population aux deux niveaux de la transition de l'absorbant étant la même, et l'émission devient une émission laser. Le laser libère alors toute son énergie; au cours de la pulsation, et après relaxation des molécules, le niveau inférieur de la transition de l'absorbant se repeuple jusqu'à ce qu'il redevienne opaque et ce phénomène se poursuit à nouveau et ainsi de suite.

On sait depuis longtemps réaliser des lasers à déclenchement passif comprenant, dans une cavité, une cellule d'amplification et une cellule d'absorption, par exemple à $CO_2$, ou un mélange de $CO_2$ et d'un autre gaz, une source de puissance continue pour l'amplification et une source de chauffage pour l'absorption.

Toutefois, la cadence des pulsations émises par les lasers à déclenchement passif réalisés jusqu'ici n'est pas rigoureusement constante, un décalage aléatoire ou sautillement (jitter) entre les pulsations successives se produisant d'une période à une autre en raison du démarrage aléatoire de l'émission laser.

Bien qu'on ait déjà proposé de réguler la cadence moyenne des pulsations d'un laser à déclenchement passif en faisant par exemple varier l'intensité lumineuse du laser, cette régulation par variation d'intensité n'a jamais pour autant réglé cette question de jitter.

C'est cette question que la présente invention se propose de traiter.

Le document APPLIED PHYSICS B. PHOTOPHYSICS AND LASER CHEMISTRY, vol. B 30, no 2, février 1983, HEIDELBERG (DE), E. ARIMONDO et al.: "Repetitive passive Q-switching and bistability in lasers with saturable absorbers", pages 57-77, certes, enseigne déjà d'exciter le gaz d'une cellule d'absorption au moyen d'une source de tension alternative à fréquence radio. Toutefois, les auteurs de l'article, dont le titre est d'ailleurs significatif, n'ont jamais cherché à résoudre cette question de jitter. Ces auteurs ne se sont en fait penchés que sur les phénomènes transitoires dûs aux variations brutales des populations d'une molécule intervenant dans une transition absorbante pour la radiation laser, induisant une modulation de puissance du laser qui est amortie. En d'autres termes, ils ont analysé comment était atteint le mode déclenché, où les temps d'amortissement deviennent infinis. Mais les travaux rapportés dans ce document sont restés confinés aux lasers à déclenchement passif.

Le problème du pilotage du déclenchement des lasers restait donc entier, et c'est ce problème que la demanderesse a cherché à résoudre.

A cet effet, la présente invention concerne un laser à déclenchement, comprenant, dans une cavité, une cellule d'un gaz d'amplification et une cellule d'un gaz d'absorption, des moyens d'excitation du gaz d'amplification et une source de tension alternative à fréquence radio qui excite le gaz d'absorption, caractérisé par le fait que la source de tension alternative à fréquence radio est pulsée à une cadence prédéterminée, et pilote la cadence de déclenchement.

La demanderesse a donc constaté qu'il était possible de contrôler le laser à déclenchement, c'est-à-dire de piloter et synchroniser la cadence de son déclenchement, de manière active, en contrôlant la cadence des pulsations de la source d'excitation de la cellule d'absorption.

Le phénomène de jitter dans l'émission laser n'est alors plus limité que par celui des pulsations de la source, c'est-à-dire qu'il est négligeable.

Dans une forme de réalisation préférée du la ser de l'invention, la puissance de la source de tension est contrôlée. Grâce au contrôle de cette puissance, et bien entendu de la pression du gaz, il est possible de contrôler le peuplement du niveau d'absorption du gaz absorbant, qui ne doit pas être trop excessif pour que la saturation se produise.

On notera qu'il suffit d'interrompre l'excitation radio-fréquence pour interrompre l'absorption dans le laser et que son émission devienne continue, à sa puissance nominale.

De préférence, les gaz des cellules d'amplification et d'absorption sont les mêmes, avec les avantages déjà mentionnés plus haut, à savoir coïncidence systématique des raies d'émission et d'absorption et donc non nécessité d'un réseau dans la cavité, peuplement du niveau inférieur de la transition commune.

La présente invention sera mieux comprise à la lecture de la description suivante d'une forme de réalisation préférée du laser de l'invention, en référence aux dessins annexés, sur lesquels:

La figure 1 représente le schéma simplifié du laser.

La figure 2 représente la courbe de variation du coefficient de transmission en fonction de la pression du gaz d'absorption, pour une excitation radio-fréquence continue.

La figure 3 représente la variation dans le temps du signal optique du laser, pour une excitation radio-fréquence continue, et

La figure 4 représente la variation dans le temps du signal optique du laser, pour une excitation radio-fréquence pulsée.

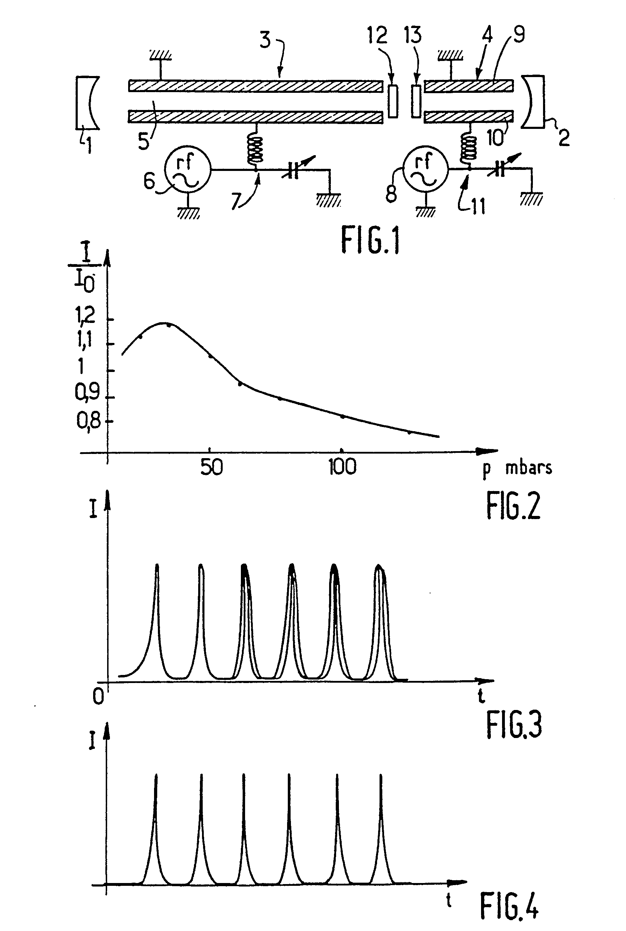

Le laser à déclenchement électrique représenté schématiquement sur la figure 1 comporte, dans une enveloppe métallique extérieure, non représentée, et fermée à ses deux extrémités par deux miroirs 1 et 2, et formant cavité résonante d'une longueur de quelques dizaines de centimètres, une première cellule 3 dite d'amplification et une deuxième cellule 4 dite d'absorption.

A la première cellule d'amplification 3 est associée une source d'alimentation pour le pompage électrique et l'émission laser de cette cellule.

Bien que, dans l'exemple considéré, ce pompage soit obtenu à partir d'un guide 5 excité par un champ à fréquence radio, en l'occurrence à 80 MHz, transverse, alimenté par une source 6 et un circuit d'adaptation d'impédances 7, il aurait été également possible de prévoir d'autres moyens de pompage.

A la deuxième cellule d'absorption 4 est associée une autre source d'excitation 8, en l'occurrence une seconde source de tension alternative à fréquence radio, à 80 MHz, dont l'amplitude est pulsée de façon connue à une cadence déterminée. Il faut noter que les fréquences d'excitation des deux cellules n'ont pas à être forcément les mêmes.

Deux électrodes 9, 10 sont reliées respectivement aux deux bornes de la source 8, l'électrode 10 par l'intermédiaire d'une impédance d'adaptation 11, et sont disposées sur la paroi externe de la cellule 4 en s'étendant sur pratiquement toute la longueur de la cellule. Il s'agit donc ici d'une excitation transverse, mais on aurait également pu prévoir une excitation longitudinale. Les parois internes de la cellule peuvent constituer également un guide de quelques centimètres de long.

En ce qui concerne l'impédance 11, sa valeur ne peut être qu'approximative, car l'impédance du plasma varie beaucoup en fonction de la pression. Dans le cas d'une cellule d'une capacité de 9 pF, l'impédance comportera une self d'accord de 0,44 $\mu$ H, et un condensateur d'accord ajusté pour abaisser le taux d'onde stationnaire au minimum.

Les extrémités de la cellule d'amplification 3 et de la cellule d'absorption 4 tournées l'une vers l'autre sont fermées par deux fenêtres anti-reflet 12, 13.

Au plan structurel, les cellules 3 et 4 peuvent être réalisées en technologie assemblée, sandwich ou couvercle, ou avantageusement dans une même technologie monolithique, conformément à la demande de brevet français no 8 212 147 au nom de la demanderesse.

Dans l'exemple considéré, la molécule active du gaz absorbant saturable est le gaz carbonique $CO_2$, bien que d'autres molécules auraient pu être adoptés. Toujours dans cet exemple, la molécule active du gaz laser est également $CO_2$, mais l'invention s'appliquerait tout aussi bien à d'autres lasers moléculaires.

La courbe de la figure 2 illustre la variation du coefficient de transmission $\frac{I}{I_c}$ de $CO_2$ en fonction de sa pression, pour une excitation radio-fréquence continue. Il s'agit d'une expérience, extra-cavité, la cellule étant éclairée par un faisceau laser de 650 mW, avec une longueur excitée d'environ 20 cm. Jusqu'à une pression d'environ 40 mbars, $CO_2$ provoque d'abord une amplification. Au-delà, le gaz est bien absorbant, et aux environs de 60 mbars, le coefficient de transmission est d'environ 0,9. Il a été constaté que la puissance de l'excitation à fréquence radio ne modifiait pas notablement le coefficient d'absorption, une fois que le plasma était amorcé.

En excitation pulsée de la cellule d'absorption, et pendant une impulsion donnée de cette excitation, l'absorption devient prépondérante au-delà d'une pression de gaz déterminée. En outre, cette pression ne doit pas non plus dépasser un certain seuil, au-delà duquel le plasma ne pourrait plus être amorcé. Cette plage de pressions admissibles s'étend sensiblement de 20 mbars à 50 mbars.

La figure 3 représente, avec plusieurs périodes de balayage superposées, le signal optique du la ser à déclenchement passif de la figure 1, la cellule d'absorption 4 étant soumise à une excitation radio-fréquence continue, dans le cas considéré avec une pression de $CO_2$ de 30 mbars,

optimisée pour la géométrie d'une cellule de 4x4x50 mm$^3$.

Comme dans les lasers de l'art antérieur, par exemple avec une cellule d'absorption à l'hexafluorure de soufre SF$_6$, le phénomène de jitter se produit, et se visualise sur un oscilloscope par l'enregistrement de plusieurs périodes de balayage.

Sur la figure 4, est encore représenté le signal optique de ce laser, mais avec une excitation de la cellule d'absorption pulsée à 100 kHz. Le déclenchement, donc actif, du laser est accroché sur les pulsations de l'excitation, sans phénomène de jitter perceptible. Toutefois, un déphasage a lieu entre les impulsions du signal optique et celles du signal électrique, d'ailleurs variable en fonction des conditions de fonctionnement. L'expérience a en outre montré que cet accrochage pouvait se poursuivre jusqu'à une cadence d'environ 200 kHz des impulsions du signal électrique, et depuis une cadence de 10 kHz.

De façon précise, à une cadence de 100 kHz du signal électrique, la puissance lumineuse moyenne du laser est cinq fois plus faible que sa puissance crête, celle-ci étant 2,5 fois plus grande que la puissance du laser en excitation radio fréquence continue.

On notera que lorsque la puissance de la source d'excitation de la cellule d'absorption augmente, la cadence du Q-switch diminue.

Les avantages du laser à déclenchement actif décrit ci-dessus sont les suivants:
- le déclenchement électrique dans CO$_2$ ne dépend pas de la raie d'émission;
- le fonctionnement en déclenchement passif as produit au voisinage du centre du profil de gain de la raie d'émission considérée;
- um réseau n'est pas nécessaire dans la cavité résonante;
- le laser peut fonctionner également avec des variétés isotopiques d'une même molécule, sous réserve que celles-ci occupent à la fois la cellule d'amplification et la cellule d'absorption;
- le pilotage de la cadence de déclenchement est aisé, cette cadence étant indépendante de la puissance d'émission du laser;
- le mode déclenché peut être interrompu à tout moment et très facilement sans modifier notablement sa puissance de fonctionnement continu;
- la cellule d'absorption peut être utilisée, avec une excitation à fréquence radio de puissance plus faible, comme régulateur de puissance d'émission du laser en fonctionnement continu.

Le laser tel qu'il vient d'être décrit peut avoir de nombreuses applications, notamment dans le domaine de la détection active infra rouge.

**Revendications**

1. Laser à déclenchement, comprenant, dans une cavité, une cellule d'un gaz d'amplification (3) et une cellule d'un gaz d'absorption (4), des moyens (7) d'excitation du gaz d'amplification et une source de tension alternative à fréquenceradio qui excite le gaz d'absorption, caractérisé par le fait que la source (8) de tension alternative à fréquence radio est pulsée à une cadence prédéterminée et pilote la cadence de déclenchement.

2. Laser selon la revendication 1, caractérisé par le fait que la puissance de la source de tension (8) peut être contrôlée.

3. Laser selon l'une des revendications 1 et 2, caractérisé par le fait que les gaz des cellules d'amplification (3) et d'absorption (4) sont les mêmes.

4. Laser selon l'une des revendications 1 à 3, caractérisé par le fait que le gaz de la cellule d'absorption (4) est du CO$_2$.

5. Laser selon l'une des revendications 1 à 4, caractérisé par le fait que les molécules des gaz des cellules d'amplification (3) et d'absorption (4) sont des variétés isotopiques d'une même molécule.

6. Laser selon l'une des revendications 1 à 5, caractérisé par le fait que la source de tension (8) est pulsée à une cadence comprise sensiblement entre 10 et 200 kHz.

**Patentansprüche**

1. Auslösungslaser, der in einem Hohlraum eine Zelle (3) für ein Verstärkergas und eine Zelle (4) für ein Absorptionsgas und eine Erregereinrichtung (7) für das Verstärkergas und eine Radiofrequenz-Wechselspannungsquelle enthält, die das Absorptionsgas erregt, dadurch gekennzeichnet, daß die Radiofrequenz-Wechselspannungsquelle (8) mit einem vorgegebenen Takt pulsiert wird und den Auslösetakt steuert.

2. Laser nach Anspruch 1, dadurch gekennzeichnet, daß die Leistung der Spannungsquelle (8) regelbar ist.

3. Laser nach einem der Ansprüche 1 und 2, dadurch gekennzeichnet, daß die Gase der Verstärkerzelle (3) und der Absorptionszelle (4) die gleichen sind.

4. Laser nach einem der Ansprüche 1 bis 3, dadurch gekennzeichnet, daß das Gas der Absorptionszelle (4) CO$_2$ ist.

5. Laser nach einem der Ansprüche 1 bis 4, dadurch gekennzeichnet, daß die Moleküle der Gase der Verstärkerzelle (3) und der Absorptionszelle (4) isotopische Variationen des gleichen Moleküls sind.

6. Laser nach einem der Ansprüche 1 bis 5, dadurch gekennzeichnet, daß die Spannungsquelle mit einem Takt pulsiert wird, der im wesentlichen zwischen 10 und 200 kHz liegt.

## Claims

1. Switching laser comprising, in a cavity, a cell (3) of an amplification gas and a cell (4) of an absorption gas, means (7) for exciting the amplification gas and a radio frequency AC voltage source which excites the absorption gas, characterized in that the radio frequency AC voltage source (8) is pulsed at a predetermined rate and pilotes the switching rate.

2. Laser as claimed in claim 1, characterized in that the power of the voltage source (8) can be controlled.

3. Laser as claimed in one of claims 1 and 2, characterized in that the gases of the amplification cell (3) and absorption cell (4) are the same.

4. Laser as claimed in one of claims 1 to 3, characterized in that the gas of the absorption cell (4) is $CO_2$.

5. Laser as claimed in one of claims 1 to 4, characterized in that the molecules of the gases of said amplification and absorption cells (3, 4) are isotopic varieties of the same molecule.

6. Laser as claimed in one of claims 1 to 5, characterized in that the age source (8) is pulsed at a rate substantially between 10 and 200 kHz.

FIG.1

FIG.2

FIG.3

FIG.4